# EUROPEAN PATENT APPLICATION

(11) **EP 4 539 186 A2**
(43) Date of publication of application: **16.04.2025**
(21) Application number: 24203535.0
(22) Date of filing: 30.09.2024
(51) Int. Cl.: H01M 10/0525, H01M 4/02

(54) **POSITIVE ELECTRODE SHEET, BATTERY, ENERGY STORAGE DEVICE, ELECTRICAL SYSTEM AND ENERGY STORAGE SYSTEM**

(30) Priority: 09.10.2023 CN 202311300652
(71) Applicant: Xiamen Hithium Energy Storage Technology Co., Ltd., Xiamen, Fujian 361100 (CN)
(72) Inventor: ZHAO, Yiqing, Xiamen, 361100 (CN); FANG, Chenxu, Xiamen, 361100 (CN)
(74) Representative: RGTH

(57) **Abstract**

The present application provides a positive electrode sheet, a battery, an energy storage device, an electrical system and an energy storage system. The present application provides a positive electrode sheet, including: a positive current collector; and a positive active layer. The positive active layer is disposed on a side of the positive current collector. The positive active layer includes a positive active material, a binder and a conductive agent. In the positive active layer, an average mass fraction of the positive active material is x, an average mass fraction of the binder is y, and an average mass fraction of the conductive agent is z. The positive active layer satisfies a relationship: 24.5≤x/(y+z)≤34.5. The positive active layer of the positive electrode sheet of the present application has a good adhesion on the positive current collector and is not easy to lose powder or material.

## Description

### TECHNICAL FIELD

The present application relates to the field of energy storage, and specifically, to a positive electrode sheet, a battery, an energy storage device, an electrical system and an energy storage system.

### BACKGROUND

With the continuous development of lithium-ion battery technology, lithium-ion batteries have the advantages of large specific capacity, no memory effect, high operating voltage, fast charging speed, wide operating temperature range, long cycle life, small volume and light weight compared with other types of batteries such as lead-acid batteries and cadmium nickel batteries. At present, lithium ions have been widely used in mobile phones, laptops, electric vehicles, energy storage cabinets and other fields, and their application range is becoming more and more extensive. When preparing the electrode sheet, the electrode slurry is coated on the current collector, and after drying, rolling and other processes, the electrode sheet is completed.

### SUMMARY

In the first aspect, the present application provides a positive electrode sheet. The positive electrode sheet comprises: a positive current collector; and a positive active layer. The positive active layer is disposed on a side of the positive current collector. The positive active layer comprises a positive active material, a binder and a conductive agent. In the positive active layer, an average mass fraction of the positive active material is x, an average mass fraction of the binder is y, and an average mass fraction of the conductive agent is z. The positive active layer satisfies a relationship: 24.5≤x/(y+z)≤34.5.

In the second aspect, the present application provides a battery. The battery comprises: an electrolyte; the positive electrode sheet described in the first aspect of the present application; a separator; and a negative electrode sheet. The positive electrode sheet is at least partially immersed in the electrolyte. The separator is located on a side of the positive electrode sheet and is at least partially immersed in the electrolyte. The negative electrode sheet is disposed on a side of the separator away from the positive electrode sheet and is at least partially immersed in the electrolyte.

In the third aspect, the present application provides an energy storage device. The energy storage device comprises: a case; and the battery described in the second aspect of the present application. The plurality of batteries are accommodated in the case. A connection manner of the plurality of batteries comprises at least one of a series connection or a parallel connection.

In the fourth aspect, the present application provides an electrical system. The electrical system comprises: an electrical equipment; and the battery described in the second aspect of the present application. The battery is electrically connected to the electrical equipment and is configured to supply power to the electric equipment.

In the fifth aspect, the present application provides an energy storage system. The energy storage system comprises: an electric energy conversion device; the energy storage device described in the third aspect of the present application; and an electrical load. The electric energy conversion device is configured to convert an energy of other form into an electric energy. The energy storage device is electrically connected to the electric energy conversion device and is configured to store the electric energy of the electric energy conversion device. The electrical load is electrically connected to the electric energy conversion device and the energy storage device, respectively, and is configured to work using the electric energy of the electric energy conversion device or the energy storage device.

### BRIEF DESCRIPTION OF THE DRAWINGS

In order to more clearly illustrate the technical solutions in the embodiments of the present application, the accompanying drawings to be used in the embodiments will be briefly introduced below. Obviously, the drawings in the following description are only some embodiments of the present application. For those of ordinary skill in the art, other drawings can be obtained based on these drawings without paying creative efforts.
FIG. 1 is an application scenario diagram of an energy storage system provided in an embodiment of the present application.
FIG. 2 is a structural schematic diagram of an energy storage system according to an embodiment of the present application.
FIG. 3 is a circuit block diagram of an energy storage system according to an embodiment of the present application.
FIG. 4 is a structural schematic diagram of an electrical system according to an embodiment of the present application, where the electrical equipment and the energy storage device are in a separated state.
FIG. 5 is a schematic diagram of a partial explosion structure of an energy storage device according to an embodiment of the present application.
FIG. 6 is a structural schematic diagram of a battery according to an embodiment of the present application.
FIG. 7 is a schematic diagram of a perspective structure of a battery according to an embodiment of the present application.
FIG. 8 is a schematic diagram of a cross-sectional structure of a negative electrode sheet according to an embodiment of the present application.
FIG. 9 is a schematic diagram of a cross-sectional structure of a positive electrode sheet according to an embodiment of the present application.
FIG. 10 is a schematic diagram of a cross-sectional structure of a positive electrode sheet according to another embodiment of the present application.
FIG. 11 is a schematic diagram of a cross-sectional structure of a positive electrode sheet according to another embodiment of the present application.
FIG. 12 is a peeling force test curve of a positive electrode sheet according to a first embodiment of the present application.
FIG. 13 is a peeling force test curve of a positive electrode sheet according to a first comparative example of the present application.
FIG. 14 is a Nyquist impedance spectrum of the positive electrode sheets according to the first embodiment and the first comparative example of the present application.
FIG. 15 is discharge curve diagrams of a half-button battery composed of the positive electrode sheets of the first embodiment and the first comparative example of the present application at 0.1P rate and 1P rate, where the left figure is a discharge curve diagram at 0.1P rate, and the right figure is a discharge curve diagram at 1P rate.

### Description of reference signs:

300-Energy storage system, 310-Electric energy conversion device, 330-Electrical load, 200-Electrical system, 210-Electrical equipment, 100-Energy storage device, 110-Case, 400-Battery, 500-Positive electrode sheet, 410-Separator, 430-Negative electrode sheet, 431-Negative current collector, 433-Negative active layer, 450-Housing, 510-Positive current collector, 520-Priming-coat layer, 530-Positive active layer, 531-First layer, 533-Second layer.

### DETAILED DESCRIPTION

In order to enable the person skilled in the art to better understand the solutions of the present application, the technical solutions in the embodiments of the present application will be clearly and completely described in conjunction with the drawings in the embodiments of the present application. Obviously, the described embodiments are only a part of the embodiments of the present application, not all of the embodiments. Based on the embodiments in the present application, all other embodiments obtained by the person skilled in the art without creative work are within the scope of protection of the present application.

The terms "first", "second", etc. in the specification and claims of the present application and the above-mentioned drawings are used to distinguish different objects, not to describe a specific order. In addition, the terms "comprise" and "have" and any of their variations are intended to cover non-exclusive inclusions. For example, processes, methods, systems, products or devices that comprises a series of steps or units is not limited to the listed steps or units, but optionally also comprises unlisted steps or units, or optionally also comprises other steps or units inherent to these processes, methods, products or devices.

The technical solutions in the embodiments of the present application will be described in conjunction with the drawings.

It can be noted that for the sake of convenience, in the embodiments of the present application, the same reference sign represents the same component, and for the sake of simplicity, detailed descriptions of the same component are omitted in different embodiments.

Since the energy that people need is highly temporal and spatial, in order to rationally utilize energy and improve the utilization rate of energy, it is necessary to use a medium or device to store one form of energy in the same form or in a converted another form of energy, and then release it in a specific form of energy based on future application needs. At present, the main way to generate green electricity is to develop green energy such as photovoltaics and wind power to replace fossil energy.

At present, the generation of green electricity generally relies on photovoltaics, wind power, water potential, etc. The wind energy and solar energy generally have the problems of strong intermittence and large fluctuation, which will cause instability of the power grid, insufficient electricity during peak electricity consumption, too much electricity during low electricity consumption, and unstable voltage will also cause damage to electricity. Therefore, it may cause "wind and light abandonment" problems due to insufficient electricity demand or insufficient grid acceptance capacity. To solve these problems, energy storage is relied on. That is, the electric energy is converted into other forms of energy and is stored through physical or chemical means, and the energy is converted into the electric energy and is released when needed. In short, the energy storage is like a large "power pal". When the photovoltaic and wind energy are sufficient, the electric energy is stored, and the stored electricity is released when needed.

Taking the energy storage device using electrochemical energy storage as an example, a group of chemical batteries are set up in the energy storage device. The chemical elements in the batteries are mainly used as the energy storage medium. The charging and discharging process is accompanied by chemical reactions or changes in the energy storage medium. Simply put, the electric energy generated by wind energy and solar energy is stored in the chemical battery, and when the use of external electric energy reaches a peak, the stored electricity is released for use, or transferred to places where electricity is scarce for use.

The current energy storage (i.e. energy accumulation) application scenarios are relatively wide, comprising energy storage on the power generation side, energy storage on the grid side, and energy storage on the power consumption side. The corresponding types of energy storage devices comprise the follows.
(1) Large energy storage power stations used on the wind power and photovoltaic power station side. The energy storage power stations can assist renewable energy generation to meet grid connection requirements and improve the utilization rate of renewable energy. The energy storage power stations are high-quality active/reactive regulating power sources on the power supply side. They realize load matching of electric energy in time and space, enhance the renewable energy consumption capacity, reduce instantaneous power changes, reduce the impact on the power grid, and improve the consumption of new energy generation. In addition, they have a great significance in terms of grid system backup, relieving of peak load power supply pressure, and regulation of peak and frequency.
(2) Container-type energy storage devices used on the grid side. The container-type energy storage devices mainly have the functions of peak regulation, frequency regulation, and relieving grid congestion. In terms of peak regulation, they can realize peak shaving and valley filling of power load. That is, the energy storage battery is charged when the power load is low, and the stored electricity is released during the power load is high, so as to achieve a balance between power production and consumption.
(3) Small energy storage cabinets (such as user energy storage systems) used on the power consumption side. The energy storage cabinets mainly have the functions of self-generation and self-use of electricity, peak-valley price arbitrage, capacity cost management and improving power supply reliability. According to different application scenarios, the energy storage on the power consumption side can be divided into industrial and commercial energy storage cabinets, household energy storage devices, energy storage charging piles, etc., which are generally used in conjunction with distributed photovoltaics. Industrial and commercial users can use the energy storage for valley-peak price arbitrage and capacity cost management. In the power market in which peak-valley electricity prices are implemented, by charging the energy storage system when the electricity price is low and discharging the energy storage system when the electricity price is high, peak-valley electricity price arbitrage can be achieved to reduce electricity costs. In addition, industrial enterprises that are subject to the two-part electricity price can use the energy storage system to store energy during low electricity consumption and discharge electricity during peak load, thereby reducing peak power and the maximum demand reported, and achieving the purpose of reducing capacity electricity charges. Household photovoltaic storage can improve the level of self-generation and self-use of electricity. Due to high electricity prices and poor power supply stability, the demand for household photovoltaic installation is stimulated. Considering that photovoltaic power is generated during the day, and users generally have relatively high loads at night, by configuring energy storage, photovoltaic power can be better utilized, the level of self-generation and self-use can be improved, and the cost of electricity can be reduced. In addition, communication base stations, data centers and other fields need to configure energy storage for backup power supply.

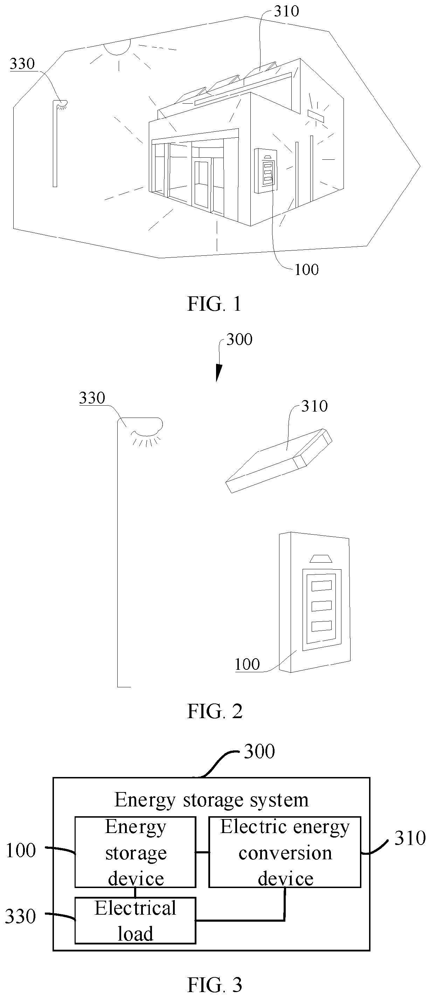

FIG. 1 is an application scenario diagram of an energy storage system 300 provided in an embodiment of the present application. The embodiment of FIG. 1 of the present application takes the household energy storage scenario in the user-side energy storage as an example for explanation, and the energy storage device 100 of the present application is not limited to the household energy storage scenario. FIG. 2 is a structural schematic diagram of an energy storage system 300 according to an embodiment of the present application. FIG. 3 is a circuit block diagram of the energy storage system 300 according to an embodiment of the present application.

Referring to FIGs. 1 to 3, the present application provides an energy storage system 300, which is a household energy storage system 300. The energy storage system 300 comprises an electric energy conversion device 310, an energy storage device 100, and an electrical load 330. The electric energy conversion device 310 is used to convert energy of other forms into electric energy. The energy storage device 100 is electrically connected to the electric energy conversion device 310, and is used to store the electric energy of the electric energy conversion device 310. The electrical load 330 is electrically connected to the electric energy conversion device 310 and the energy storage device 100, respectively, and is used to work with the electric energy of the electric energy conversion device 310 or the energy storage device 100. It can be understood that part of the electric energy converted by the electric energy conversion device 310 is stored in the energy storage device 100, and part of the electric energy converted by the electric energy conversion device 310 is used to supply power to the electrical load 330. The energy storage device 100 is used to store electric energy and supply the electric energy to the electrical load 330 when the electricity price is peak. The energy storage system 300 can convert energy of other forms into electric energy, and can store the electric energy in the energy storage device 100 to supply the electrical load 330 with sufficient electric energy.

Optionally, the electric energy conversion device 310 can convert at least one of solar energy, light energy, wind energy, thermal energy, tidal energy, biomass energy and mechanical energy into electric energy to provide a stable power supply for the electrical load 330 and the energy storage device 100.

Optionally, the electric energy conversion device 310 may be a photovoltaic panel. The photovoltaic panel can convert solar energy into electric energy and store it in the energy storage device 100 during the period of low electricity price. In other embodiments, the electric energy conversion device 310 may also be at least one of a wind power generation device, a thermal power generation device, a tidal power generation device, a biomass power generation device or a mechanical power generation device.

Optionally, the energy storage device 100 is a small energy storage box that can be mounted on an outdoor wall by wall hanging. In other embodiments, the energy storage device 100 may also be a large container-type energy storage device, a battery used for electronic equipment, etc.

Optionally, the electrical load 330 may be a street lamp or household appliance, a motor vehicle, etc. The energy storage device 100 is used to store the electric energy and supply it to the street lamp and household appliance for use when the electricity price is at a peak, or to supply power when the power grid is off/out of power.

It can be understood that the energy storage device 100 may comprise, but is not limited to, at least one of a single cell, a battery module, a battery pack, a battery system, etc. The single cell may be, but is not limited to, at least one of a cylindrical battery, a square battery, etc.

It can be understood that the drawings in this implementation are only a form of the energy storage system 300, and cannot not be understood as a limitation on the energy storage system 300 provided in the present application, nor can it be understood as a limitation on the energy storage device 100 provided in each implementation of the present application.

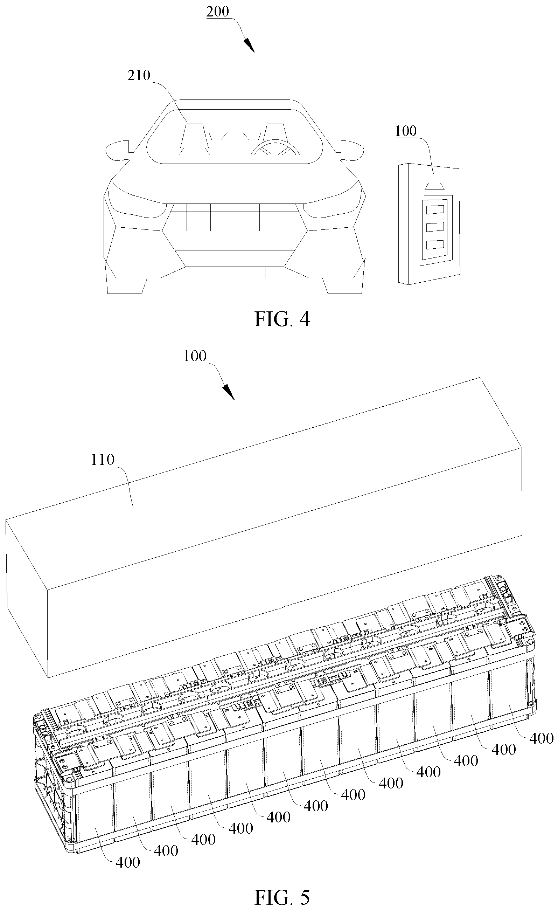

FIG. 4 is referred to, which is a schematic diagram of a structure of an electrical system 200 according to an embodiment of the present application. The embodiment of the present application also provides an electrical system 200. The electrical system 200 comprises: an electrical equipment 210 and an energy storage device 100. The energy storage device 100 supplies power to the electrical equipment 210.

The electrical equipment 210 of the embodiment of the present application may be, but is not limited to, a portable electronic device such as a mobile phone, a tablet computer, a laptop computer, a desktop computer, a smart bracelet, a smart watch, an e-reader, a game console, etc. It may also be a means of transportation such as an automobile, a truck, a car, a lorry, a delivery car, a railway high-speed, a high-speed railway, an electric automatic vehicle, etc. In addition, it may also be various household appliances such as a refrigerator, an electric light, an air conditioner, etc.

It can be understood that the electrical equipment 210 in the drawings of the present application is exemplified by an automobile, and the electrical system 200 illustrated in the drawings of the present application is only one form of the electrical equipment 210, and cannot be understood as a limitation on the electrical system 200 and the electrical equipment 210 provided in the present application.

FIG. 5 is a schematic diagram of a partial explosion structure of an energy storage device 100 according to an embodiment of the present application. Referring to FIG. 5, the embodiment of the present application also provides an energy storage device 100. The energy storage device 100 comprises a case 110 and a plurality of batteries 400. The plurality of batteries 400 are accommodated in the case 110. The connection manner of the plurality of batteries 400 comprises at least one of series connection or parallel connection.

Optionally, the battery 400 may be, but is not limited to, a lithium-ion secondary battery, a lithium-ion primary battery, a lithium-sulfur battery, a sodium-lithium-ion battery, a sodium-ion battery or a magnesium-ion battery, an energy storage battery, etc.

The term "a plurality of" means more than or equal to two.

It can be understood that the plurality of batteries 400 of the energy storage device 100 may be connected in parallel with each other; or in series with each other; or partially in parallel and partially in series. The present application does not specifically limit the connection manner of the plurality of batteries 400 of the same energy storage device 100.

It can be understood that the plurality of batteries 400 are arranged in an array, or arranged orderly in a stacked manner in the case 110, which is not specifically limited by the present application.

It can be understood that the case 110 has a receiving cavity (not shown), and the plurality of batteries 400 are received in the receiving cavity. In some embodiments, each receiving cavity receives one battery 400. In other embodiments, each receiving cavity receives multiple batteries 400.

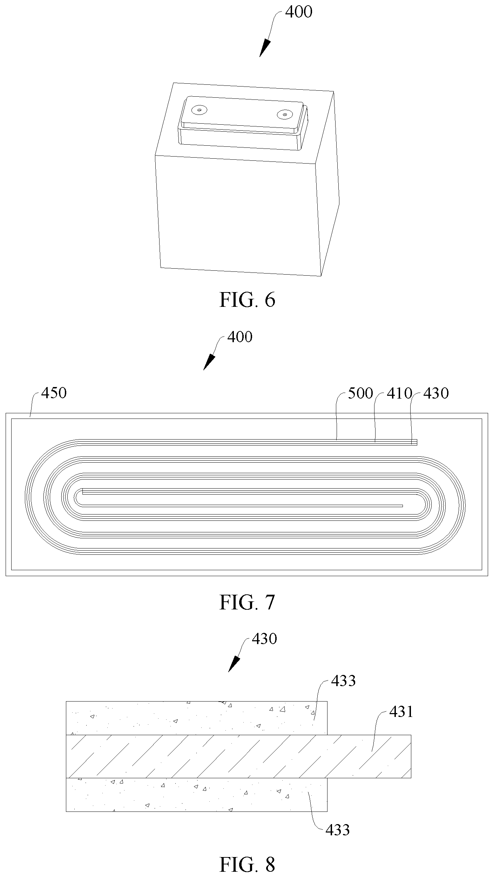

FIG. 6 is a schematic diagram of a structure of a battery according to an embodiment of the present application. FIG. 7 is a schematic diagram of a perspective structure of a battery according to an embodiment of the present application.

Referring to FIGs. 6 and 7, the embodiment of the present application also provides a battery 400. The battery 400 comprises: an electrolyte (not shown), a positive electrode sheet 500, a separator 410 and a negative electrode sheet 430. The positive electrode sheet 500 is at least partially immersed in the electrolyte. The separator 410 is located on a side of the positive electrode sheet 500 and is at least partially immersed in the electrolyte. The negative electrode sheet 430 is disposed on a side of the separator 410 away from the positive electrode sheet 500 and is at least partially immersed in the electrolyte.

Optionally, the electrolyte comprises a lithium salt and an organic solvent. The lithium salt may be, but is not limited to, lithium hexafluorophosphate. The organic solvent may be, but is not limited to, at least one of ethylene carbonate, dimethyl carbonate, ethyl methyl carbonate, etc.

Optionally, it may be, but is not limited to, at least one of polypropylene film (PP) or polyethylene film (PE).

Optionally, in some embodiments, the battery 400 further comprises a housing 450. The housing 450 is used to accommodate the electrolyte, the positive electrode sheet 500, the separator 410, and the negative electrode sheet 430.

Referring to FIG. 8, optionally, the negative electrode sheet 430 comprises a negative current collector 431 and a negative active layer 433. The negative active layer 433 is disposed on a side of the negative current collector 431.

Optionally, the negative current collector 431 may be, but is not limited to, a copper sheet. The negative active layer 433 comprises a negative active material. The negative active material comprises at least one of graphite, natural graphite, artificial graphite, silicon-carbon composite material, hard carbon, etc.

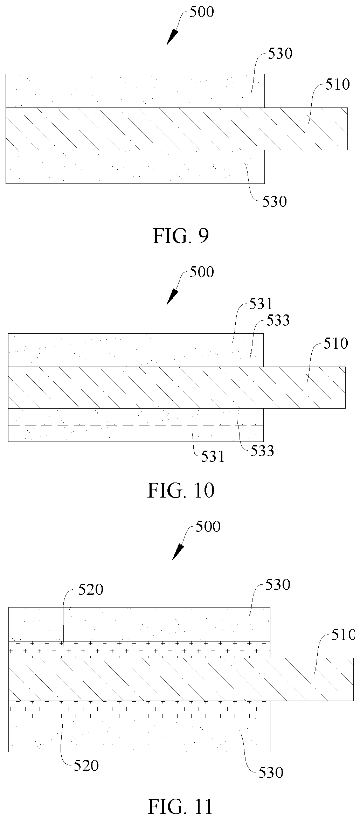

Referring to FIG. 9, the embodiment of the present application provides a positive electrode sheet 500. The positive electrode sheet 500 comprises a positive current collector 510 and a positive active layer 530. The positive active layer 530 is disposed on a side of the positive current collector 510. The positive active layer 530 comprises a positive active material, a binder and a conductive agent. In the positive active layer 530, the average mass fraction of the positive active material is x, the average mass fraction of the binder is y, and the average mass fraction of the conductive agent is z. The positive active layer 530 satisfies a relationship: 24.5≤x/(y+z)≤34.5.

For example, x/(y+z) may be, but is not limited to, 24.5, 25, 26, 27, 28, 29, 30, 31, 32, 33, 34, 34.5, etc. If x/(y+z) is too small, the proportion of the positive active material in the positive active layer 530 is low, and the capacity per unit volume or unit mass is low. When it is applied to the battery 400, the energy storage density of the battery 400 is reduced. If x/(y+z) is too large, the content of the conductive agent may be too small, which reduces the conductivity of the positive active layer 530 and increases the impedance of the positive active layer 530; or the content of the binder is too small, the bonding is insufficient, and the positive active layer 530 is prone to losing powder, losing material, being rolled abnormally, etc.

The positive active layer 530 of the positive electrode sheet 500 of the embodiment of the present application comprises a positive active material, a binder and a conductive agent. In the positive active layer 530, the mass fraction of the positive active material is x, the mass fraction of the binder is y, and the mass fraction of the conductive agent is z. The positive active layer 530 satisfies 24.5≤x/(y+z)≤34.5. In this way, the positive active layer 530 has a relatively high conductivity and a relatively low impedance. At the same time, it can make the positive active layer 530 less likely to lose powder, lose material, roll abnormally and the like, avoiding the powder loss or material loss of the positive active layer 530, which affects the specific capacity or energy storage density and the cycle capacity retention rate of the battery 400 using the positive electrode sheet 500.

Optionally, the positive current collector 510 may be, but is not limited to, an aluminum sheet.

Optionally, the positive active material may be, but is not limited to, lithium iron phosphate (LiFePO4, referred to as LFP).

Optionally, the conductive agent may be, but is not limited to, at least one of conductive carbon black, carbon nanotubes, etc.

Optionally, the binder may be, but is not limited to, polyvinylidene fluoride (PVDF). Polyvinylidene fluoride (PVDF) is a polymer material with a high dielectric constant, good chemical stability and temperature characteristics, and excellent mechanical properties and processability. It has a positive effect on improving the bonding performance of the positive active layer 530 on the positive current collector 510.

Optionally, in the positive active layer 530, the average mass fraction of the positive active material is in the range of 96.1%≤x≤97.2%.

For example, in the positive active layer 530, the average mass fraction of the positive active material may be, but is not limited to, 96.1%, 96.2%, 96.3%, 96.4%, 96.5%, 96.6%, 96.7%, 96.8%, 96.9%, 97.0%, 97.1%, 97.2%, etc.

In this embodiment, when the average mass fraction of the positive active material in the positive active layer 530 is too small, the mass capacity and volume capacity of the battery 400 will be reduced when the positive electrode sheet 500 is applied to the battery 400. When the average mass fraction of the positive active material in the positive active layer 530 is too large, it means that the binder and the conductive agent are too small, so that the conductivity of the positive active layer 530 is insufficient, the impedance is large, and the adhesion is too low, resulting in the inability to coat or the positive active layer 530 cracking and losing powder.

Optionally, in the positive active layer 530, the average mass fraction of the binder is in the range of 0.8%≤y≤3.9%.

For example, in the positive active layer 530, the average mass fraction of the binder may be, but is not limited to, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 3.9%, etc.

In this embodiment, if the average mass fraction of the binder in the positive active layer 530 is too small, the adhesion is insufficient, resulting in failure to coat, or cracking and losing powder of the positive electrode sheet 500. If the average mass fraction of the binder in the positive active layer 530 is too large, the shear viscosity of the positive electrode slurry formed by mixing the positive active material, the binder and the conductive agent increases, the fluidity deteriorates, and the thixotropic recovery first increases and then decreases, making it difficult to coat normally. When the average mass fraction of the binder in the positive active layer 530 is in the range of 0.8%≤y≤3.9%, the positive electrode active particles can form a uniform and stable dispersed structure in the positive electrode slurry, so that better coating can be performed and the phenomenon of powder or material loss of the positive electrode sheet 500 can be reduced.

Optionally, in the positive active layer 530, the average mass fraction of the conductive agent is in the range of 0≤z≤2%.

For example, in the positive active layer 530, the average mass fraction of the conductive agent may be, but is not limited to, 0, 0.2%, 0.4%, 0.6%, 0.8%, 1.0%, 1.2%, 1.4%, 1.6%, 1.8%, 2%, etc.

It can be understood that the positive active layer 530 may not have a conductive agent, but the absence of the conductive agent will have a certain impact on the dynamic performance of the positive active layer 530.

In this embodiment, if the average mass fraction of the conductive agent is too small, the conductive layer of the positive active layer 530 is too poor, which is not conducive to the dynamic performance of the positive electrode sheet 500. If the average mass fraction of the conductive agent is too large, the positive electrode slurry formed by the positive active material, the binder and the conductive agent is difficult to disperse, and the slurry is easy to agglomerate, which is not conducive to the coating of the positive electrode slurry.

In some embodiments, in the positive active layer 530, the average mass fraction of the positive active material is in the range of 96.5%≤x≤97.0%, the average mass fraction of the binder is in the range of 2.2%≤y≤3.2%, and the average mass fraction of the conductive agent is in the range of 0.3%≤z≤0.8%. In this way, the positive electrode sheet 500 can have a relatively high specific capacity and a relatively good dynamic performance, and the positive active layer 530 is not easy to crack and lose powder.

In some embodiments, a concentration of the binder gradually decreases from a side of the positive active layer 530 away from the positive current collector 510 to a side of the positive active layer 530 close to the positive current collector 510.

It can be understood that the concentration of the binder on the side of the positive active layer 530 away from the positive current collector 510 is greater than the concentration of the binder on the side of the positive active layer 530 close to the positive current collector 510.

It can also be understood that the distribution of the binder in the positive active layer 530 gradually increases from the side close to the positive current collector 510 to the side away from the positive current collector 510.

In this embodiment, by making the binder distributed in the positive active layer 530 in a gradient, the positive active layer 530 has a higher concentration on the side away from the positive current collector 510, which can better prevent the positive active layer 530 of the positive electrode sheet 500 from losing powder or dregs. In addition, when the positive electrode sheet 500 is applied to the battery 400, the positive active layer 530 can be better swollen by the electrolyte and enter the inside of the positive electrode sheet 500, which is beneficial to the liquid retention of the positive active layer 530. Furthermore, the amount of surface binder of the positive active layer 530 increases, which can increase the polarization effect of the positive electrode sheet 500, improve the high-voltage stability of the positive electrode sheet 500, and thus improve the safety of the battery 400 under overcharge voltage conditions.

In some embodiments, the difference between the mass fraction of the binder in the side of the positive active layer 530 away from the positive current collector 510 and the mass fraction of the binder in the side of the positive active layer 530 close to the positive current collector 510 is in a range of 0.01%≤ Δy≤0.4%.

In other words, the difference in mass concentration of the binder in the positive active layer 530 on the side of the positive active layer 530 away from the positive current collector 510 and the side of the positive active layer 530 close to the positive current collector 510 is in the range of 0.01%≤ Δy≤0.4%.

For example, the difference between the mass fraction of the binder on the side of the positive active layer 530 away from the positive current collector 510 and the mass fraction of the binder on the side of the positive active layer 530 close to the positive current collector 510 may be, but is not limited to, 0.01%, 0.03%, 0.05%, 0.08%, 0.1%, 0.15%, 0.2%, 0.25%, 0.3%, 0.35%, 0.4%, etc.

For example, the mass fraction of the binder on the side of the positive active layer 530 away from the positive current collector 510 is 3.0%, and the mass fraction of the binder on the side of the positive active layer 530 close to the positive current collector 510 is 2.7%. From the side of the positive active layer 530 away from the positive current collector 510 to the side of the positive active layer 530 close to the positive current collector 510, the concentration of the binder gradually decreases from 3.0% to 2.7%.

For another example, the mass fraction of the binder on the side of the positive active layer 530 away from the positive current collector 510 is 3.5%, and the mass fraction of the binder on the side of the positive active layer 530 close to the positive current collector 510 is 3.1%. From the side of the positive active layer 530 away from the positive current collector 510 to the side of the positive active layer 530 close to the positive current collector 510, the concentration of the binder gradually decreases from 3.5% to 3.1%.

For another example, the mass fraction of the binder on the side of the positive active layer 530 away from the positive current collector 510 is 1.5%, and the mass fraction of the binder on the side of the positive active layer 530 close to the positive current collector 510 is 1.3%. From the side of the positive active layer 530 away from the positive current collector 510 to the side of the positive active layer 530 close to the positive current collector 510, the concentration of the binder gradually decreases from 1.5% to 1.3%.

In this embodiment, if the difference between the mass fraction of the binder on the side of the positive active layer 530 away from the positive current collector 510 and the mass fraction of the binder on the side of the positive active layer 530 close to the positive current collector 510 is too large, the binder at the position of the positive active layer 530 close to the positive current collector 510 is too little, and the binder at the position away from the positive current collector 510 is too much. In this case, the adhesion of the positive active layer 530 on the positive current collector 510 is reduced, and the positive active layer 530 is prone to peeling off the foil, which increases the impedance and affects the performance of the battery 400 using the positive electrode sheet 500. If the difference between the mass fraction of the binder on the side of the positive active layer 530 away from the positive current collector 510 and the mass fraction of the binder on the side of the positive active layer 530 close to the positive current collector 510 is too small, the bonding force of the surface layer of the positive active layer 530 is insufficient, and the positive active layer 530 is prone to losing powder or dregs. In this case, the capacity and cycle capacity retention rate of the positive electrode sheet 500 is affected, and the swelling performance for the electrolyte is poor, which is not conducive to the electrolyte entering the interior of the positive electrode sheet 500. That is, the penetration ability of the electrolyte molecules into the interior of the positive active layer 530 is reduced, which is not conducive to liquid retention.

Further, the difference between the mass fraction of the binder on the side of the positive active layer 530 away from the positive current collector 510 and the mass fraction of the binder on the side of the positive active layer 530 close to the positive current collector 510 is in the range of: 0.05%≤ Δy≤0.3%. When the difference between the mass fraction of the binder on the side of the positive active layer 530 away from the positive current collector 510 and the mass fraction of the binder on the side of the positive active layer 530 close to the positive current collector 510 is within this range, the bottom of the positive active layer 530 (i.e., the part close to the positive current collector 510) can have a relatively high adhesiveness, so that the positive active layer 530 and the positive current collector 510 have a relatively high bonding force. At the same time, the surface layer of the positive active layer 530 (i.e., the part away from the positive current collector 510) has enough adhesive, and it is not easy to have powder or slag falling. In addition, the positive active layer 530 can better swell the electrolyte, which is conducive to the electrolyte entering the interior of the positive electrode sheet 500.

Referring to FIG. 10, in some embodiments, along a stacking direction of the positive current collector 510 and the positive active layer 530, the positive active layer 530 is divided into a first layer 531 and a second layer 533 with equal thickness. The first layer 531 is farther away from the positive current collector 510 than the second layer 533. The average mass fraction of the binder in the first layer 531 is y1, and the average mass fraction of the binder in the second layer 533 is y2, then 1.01≤y1/y2≤1.20.

For example, y1/y2 may be, but is not limited to, 1.01, 1.03, 1.05, 1.07, 1.1, 1.12, 1.14, 1.16, 1.18, 1.20, etc.

In this embodiment, if y1/y2 is too small, the bonding force of the surface layer of the positive active layer 530 is insufficient, and the positive active layer 530 is prone to losing powder or dregs. In this case, the capacity and cycle capacity retention rate of the positive electrode sheet 500 is affected, and the swelling performance for the electrolyte is poor, which is not conducive to the electrolyte entering the interior of the positive electrode sheet 500. If y1/y2 is too large, the positive active layer 530 has too little binder near the positive current collector 510, and the content of the binder is too much at the position away from the positive current collector 510. In this case, the adhesion of the positive active layer 530 to the positive current collector 510 is reduced, and the positive active layer 530 is prone to peeling off the foil, which increases impedance and affects the performance of the battery 400 using the positive electrode sheet 500. When y1/y2 is 1.01 to 1.2, the positive active layer 530 can have good adhesion on the positive current collector 510 and the positive active layer 530 is not easy to losing dregs. At the same time, the binder on the surface of the positive active layer 530 can be better swollen by the electrolyte, which is conducive to the electrolyte to penetrate into the positive electrode sheet 500, and is conducive to improving the dynamic performance of the positive electrode sheet 500. In addition, the polarization effect on the side of the positive electrode sheet 500 can be increased, and the high-voltage stability of the positive electrode sheet 500 can be improved, thereby improving the safety of the battery 400 under overcharge voltage conditions.

In some embodiments, the concentration of the conductive agent gradually decreases from the side of the positive active layer 530 away from the positive current collector 510 to the side of the positive active layer 530 close to the positive current collector 510.

It can be understood that the concentration of the conductive agent on the side of the positive active layer 530 away from the positive current collector 510 is greater than the concentration of the conductive agent on the side of the positive active layer 530 close to the positive current collector 510.

It can also be understood that the distribution of the conductive agent in the positive active layer 530 gradually increases from the side close to the positive current collector 510 to the side away from the positive current collector 510.

In this embodiment, by making the concentration of the conductive agent on the surface of the positive active layer 530 larger, the concentration of the conductive agent at the bottom layer of the positive active layer 530 smaller, and making the concentration of the conductive agent gradually decrease from the surface layer to the bottom layer, the surface of the positive active layer 530 can have a relatively small contact impedance, thereby having a relatively good rate performance. In addition, the positive active layer 530 can also have a relatively uniformly distributed current density.

In some embodiments, the difference between the mass fraction of the conductive agent on the side of the positive active layer 530 away from the positive current collector 510 and the mass fraction of the conductive agent on the side of the positive active layer 530 close to the positive current collector 510 is in the range of 0.01%≤ Δz≤0.4%.

In other words, the difference between the mass concentration of the conductive agent on the side of the positive active layer 530 away from the positive current collector 510 and the side of the positive active layer 530 close to the positive current collector 510 in the positive active layer 530 is in the range of 0.01%≤ Δz≤0.4%.

For example, the difference between the mass fraction of the conductive agent on the side of the positive active layer 530 away from the positive current collector 510 and the mass fraction of the conductive agent on the side of the positive active layer 530 close to the positive current collector 510 may be, but is not limited to, 0.01%, 0.03%, 0.05%, 0.08%, 0.1%, 0.15%, 0.2%, 0.25%, 0.3%, 0.35%, 0.4%, etc.

For example, the mass fraction of the conductive agent on the side of the positive active layer 530 away from the positive current collector 510 is 2%, and the mass fraction of the conductive agent on the side of the positive active layer 530 close to the positive current collector 510 is 1.6%. From the side of the positive active layer 530 away from the positive current collector 510 to the side of the positive active layer 530 close to the positive current collector 510, the concentration of the conductive agent gradually decreases from 2.0% to 1.6%.

For another example, the mass fraction of the conductive agent on the side of the positive active layer 530 away from the positive current collector 510 is 1.5%, and the mass fraction of the conductive agent on the side of the positive active layer 530 close to the positive current collector 510 is 1.25%. From the side of the positive active layer 530 away from the positive current collector 510 to the side of the positive active layer 530 close to the positive current collector 510, the concentration of the conductive agent gradually decreases from 1.5% to 1.25%.

For another example, the mass fraction of the conductive agent on the side of the positive active layer 530 away from the positive current collector 510 is 1%, and the mass fraction of the conductive agent on the side of the positive active layer 530 close to the positive current collector 510 is 0.7%. From the side of the positive active layer 530 away from the positive current collector 510 to the side of the positive active layer 530 close to the positive current collector 510, the concentration of the conductive agent gradually decreases from 10% to 0.7%.

In this embodiment, if the difference between the mass fraction of the conductive agent in the side (also called the surface layer) of the positive active layer 530 away from the positive current collector 510 and the mass fraction of the conductive agent in the side (also called the bottom layer) of the positive active layer 530 close to the positive current collector 510 is too small, the conductivity of the surface layer of the positive active layer 530 is less different from that of the bottom layer. In this case, the contact impedance of the surface of the positive active layer 530 away from the positive current collector 510 is large, and the rate performance of the positive electrode sheet 500 is poor. If the difference between the mass fraction of the conductive agent in the side of the positive active layer 530 away from the positive current collector 510 and the mass fraction of the conductive agent in the side of the positive active layer 530 close to the positive current collector 510 is too large, the conductivity of the side of the positive active layer 530 facing the positive current collector 510 is poor, so that the current distribution of the positive electrode sheet 500 is uneven, which affects the performance of the battery 400 using the positive electrode sheet 500. When the difference between the mass fraction of the conductive agent on the side of the positive active layer 530 away from the positive current collector 510 and the mass fraction of the conductive agent on the side of the positive active layer 530 close to the positive current collector 510 is in the range of 0.01%≤ Δy≤0.4%, the surface of the positive active layer 530 can have a relatively small contact impedance, thereby having a relatively good rate performance. In addition, the positive active layer 530 can also have a more uniformly distributed current density.

In some embodiments, along the stacking direction of the positive current collector 510 and the positive active layer 530, the positive active layer 530 is divided into a first layer 531 and a second layer 533 with equal thickness. The first layer 531 is farther away from the positive current collector 510 than the second layer 533. The average mass fraction of the conductive agent in the first layer 531 is z1, and the average mass fraction of the conductive agent in the second layer 533 is z2, then 1.01≤z1/z2≤1.20.

For example, z1/z2 may be, but is not limited to, 1.01, 1.03, 1.05, 1.07, 1.1, 1.12, 1.14, 1.16, 1.18, 1.20, etc.

In this embodiment, if z1/z2 is too small, the difference in conductivity between the first layer 531 and the second layer 533 of the positive active layer 530 is small, so that the contact impedance of the surface of the positive active layer 530 away from the positive current collector 510 is large, and the rate performance of the positive electrode sheet 500 is poor. If z1/z2 is too large, the conductivity of the side (or the second layer 533) of the positive active layer 530 facing the positive current collector 510 is poor, so that the current distribution of the positive electrode sheet 500 is uneven, which affects the performance of the battery 400 using the positive electrode sheet 500. When 1.01≤z1/z2≤ 1.20, the surface of the positive active layer 530 can have a relatively small contact impedance, thereby having a relatively good rate performance. In addition, the positive active layer 530 can also have a more uniformly distributed current density.

Referring to FIG. 11, in some embodiments, the positive electrode sheet 500 also comprises a priming-coat layer 520. The priming-coat layer 520 is disposed between the positive current collector 510 and the positive active layer 530. The priming-coat layer 520 is used to improve the adhesion of the positive active layer 530 on the positive current collector 510.

In this embodiment, by providing the priming-coat layer 520 between the positive current collector 510 and the positive active layer 530, the adhesion of the positive active layer 530 on the positive current collector 510 can be improved, thereby better preventing the positive electrode sheet 500 from being delaminated or the positive active layer 530 from falling off during use, and improving the cycle performance of the battery 400 using the positive electrode sheet 500.

In some embodiments, the mass fraction of the priming-coat layer 520 to the positive active layer 530 is b, where 4≤y/b≤8.

It can be understood that the ratio of the mass fraction y of the binder in the positive active layer 530 to the mass fraction b of the priming-coat layer 520 to the positive active layer 530 is in the range of 4 to 8. For example, the ratio of the mass fraction y of the binder in the positive active layer 530 to the mass fraction b of the priming-coat layer 520 to the positive active layer 530 is 4, 4.5, 5, 5.5, 6, 6.5, 7, 7.5, 8, etc.

Optionally, the mass fraction b of the priming-coat layer 520 to the positive active layer 530 is in the range of 0.1% to 0.3%. For example, the mass fraction b of the priming-coat layer 520 to the positive active layer 530 may be, but is not limited to, 0.1%, 0.13%, 0.15%, 0.18%, 0.2%, 0.23%, 0.25%, 0.28%, 0.3%. If the mass fraction of the priming-coat layer 520 to the positive active layer 530 is too small, the adhesion of the priming-coat layer 520 is insufficient, which reduces the adhesion of the positive active layer 530 on the positive current collector 510, making the positive active layer 530 easy to peeling off the foil. If the mass fraction of the priming-coat layer 520 to the positive active layer 530 is too large, the proportion of the positive active layer 530 is reduced, the content of the positive active material is reduced, and thus the energy density of the positive electrode sheet 500 is reduced.

In this embodiment, if the ratio of the mass fraction y of the binder in the positive active layer 530 to the mass fraction b of the priming-coat layer 520 to the positive active layer 530 is too small, the priming-coat layer 520 accounts for too much of the mass fraction of the positive active layer 530, that is, the content of the priming-coat layer 520 is too much. Thus, the thickness of the positive electrode sheet 500 is increased, the total proportion of the positive active layer 530 is reduced, and the volume capacity and mass capacity of the battery 400 using the positive electrode sheet 500 is affected. If the ratio of the mass fraction y of the binder in the positive active layer 530 to the mass fraction b of the priming-coat layer 520 to the positive active layer 530 is too large, the mass fraction of the priming-coat layer 520 to the positive active layer 530 is too small, that is, the content of the priming-coat layer 520 is too small. Thus, the bonding force between the active material layer and the positive current collector 510 is reduced, peeling off the foil is easily caused, the conductivity of the positive electrode sheet 500 is reduced, the impedance is increased, and the performance of the battery 400 using the positive electrode sheet 500 is affected.

In some embodiments, the priming-coat layer 520 comprises an adhesive and conductive particles. In the priming-coat layer 520, the mass fraction of the conductive particles ranges from 0.01% to 0.1%.

For example, in the priming-coat layer 520, the mass fraction of the conductive particles may be, but is not limited to, 0.01%, 0.02%, 0.04%, 0.06%, 0.08%, 0.1%, etc. If the mass fraction of the conductive particles is too small, the conductivity of the priming-coat layer 520 is reduced and the impedance of the priming-coat layer 520 is increased. If the mass fraction of the conductive particles is too large, the conductive particles are easily dispersed unevenly in the adhesive, so that the battery 400 using the positive electrode sheet 500 is prone to excessive local current during subsequent charging and discharging, affecting the performance of the battery 400.

Optionally, the adhesive may be, but is not limited to, at least one of polyacrylic acid (PAA for short), polymethyl acrylate (PMA for short), polymethyl methacrylate (PMMA), or polyacrylonitrile (PAN for short).

Optionally, the conductive particles may be, but are not limited to, at least one of conductive carbon black or carbon nanotubes.

In this embodiment, by adding conductive particles with a mass fraction of 0.01% to 0.1% to the priming-coat layer 520, the conductivity of the priming-coat layer 520 can be improved, and the impedance of the priming-coat layer 520 is reduced, while improving the adhesion strength of the positive active layer 530 on the surface of the positive current collector 510. In addition, the problems of uneven dispersion of conductive particles and excessive local current caused by excessive content of the conductive particles is avoided.

The resistivity of the positive electrode sheet 500 of the present application is 60Ω•cm to 90Ω•cm; for example, 60Ω•cm, 65Ω•cm, 70Ω•cm, 75Ω•cm, 80Ω•cm, 85Ω•cm, 90Ω•cm, etc.

The charge transfer impedance Rct of the positive electrode sheet 500 of the present application is 9Ω to 12Ω; for example, 9Ω, 10Ω, 11Ω, 112Ω, etc.

It is found through experiments that the positive electrode sheet 500 of the present application that satisfies the relationship 24.5≤x/(y+z)≤34.5 has a relatively low resistivity and charge transfer impedance, which is beneficial to utilizing the dynamic performance of the positive electrode sheet 500.

The positive electrode sheet 500 of the embodiment of the present application can be prepared by the method described in the following embodiments of the present application. In addition, it can also be prepared by other methods. The preparation method of the embodiment of the present application is only one or more preparation methods of the positive electrode sheet 500 of the present application, and cannot be understood as a limitation on the positive electrode sheet 500 provided in the embodiment of the present application.

The embodiment of the present application also provides a method for preparing a positive electrode sheet 500. The preparation method comprises the following steps.
1) The positive active material, the conductive agent and the binder are weighed respectively according to a preset ratio, stirred and dispersed in an organic solvent (such as N-methylpyrrolidone, NMP), and stirred at a speed of 250rmp to 450rmp for 30min to 90min to prepare a positive electrode slurry.
2) The positive electrode slurry is coated on the positive current collector 510 (such as the aluminum foil), and dried to obtain a positive electrode sheet 500.

For example, the positive electrode slurry is coated on the positive current collector 510 at a coating speed of 4m/min to 7.5m/min, and moved at a speed of 4m/min to 7.5m/min in a vacuum drying oven at a temperature of 100°C to 115°Cfrom the head to the tail of the vacuum drying oven.

Optionally, the coating speed of the positive electrode slurry ranges from 4m/min to 7.5m/min. For example, the coating speed of the positive electrode slurry may be, but is not limited to, 4m/min, 4.5m/min, 5m/min, 5.5m/min, 6m/min, 6.5m/min, 7m/min, 7.5m/min, etc.

Optionally, after coating, it is dried in the vacuum drying oven, and the temperature of the drying oven ranges from 100°C to 115°C. For example, the temperature of the drying oven may be, but is not limited to, 100°C, 102°C, 104°C, 108°C, 110°C, 112°C, 114°C, 115°C, etc.

Optionally, the moving speed of the positive electrode sheet 500 during drying ranges from 4m/min to 7.5m/min. For example, the moving speed of the positive electrode sheet 500 during drying may be, but is not limited to, 4m/min, 4.5m/min, 5m/min, 5.5m/min, 6m/min, 6.5m/min, 7m/min, 7.5m/min, etc.

It can be understood that when the positive electrode sheet 500 comprises a priming-coat layer 520, the priming-coat layer 520 is first coated on the positive current collector 510, and then the positive electrode slurry is coated on the priming-coat layer 520 to form the positive active layer 530.

The preparation method of the positive electrode sheet 500 of the present application controls the drying temperature and drying time of the positive electrode slurry, so that the concentration of the binder in the positive active layer 530 gradually decreases from the side of the positive active layer 530 away from the positive current collector 510 to the side of the positive active layer 530 close to the positive current collector 510, and the concentration gradients of the binder and the conductive agent are controlled within certain ranges.

Any solid surface is uneven when enlarged. In order to make the binder completely fit the morphology of the solid surface, the binder may be turned into a liquid and completely infiltrate the surface of the solid during the bonding process. If the infiltration is incomplete, many bubbles will appear in the interface, and stress concentration will occur around the bubbles under the action of stress, resulting in a decrease in strength. Since the surface tension of the organic liquid does not differ too much, the time required for infiltration mainly depends on the liquid viscosity and the contact angle. The lower the liquid viscosity, the shorter the infiltration time, and the gaps in the surface can be fully infiltrated. The smaller the contact angle, the faster the infiltration speed. When the binder is PVDF and the organic solvent is NMP, the free ammonia in NMP attacks the C-F bond of PVDF, causing the C-F and C-H bonds to break and double bonds to form on the PVDF chain. At the same time, the double bonds are very unstable and are easily attacked by other polar groups in the solution, causing PVDF to connect to other groups. Generally, this separation helps to improve the bonding performance of PVDF. Therefore, during the preparation process of the positive electrode sheet 500, the reaction time is adjusted to adjust the HF separation reaction, so that the coating, the drying temperature and the surface viscosity remain unchanged, but the infiltration effect is improved, thereby improving the dynamics and reducing the impedance.

The following is a further description of the positive electrode sheet 500 of the present application through specific embodiments.

### First embodiment

The positive electrode sheet 500 of this embodiment is prepared by the following steps.
1) Polymethyl methacrylate (PMMA, i.e., adhesive) and conductive carbon black (i.e., conductive particles) are placed in a stirring tank, and are fully stirred and dispersed in water in a certain proportion to obtain a priming-coat layer slurry. The priming-coat layer slurry is coated on the aluminum foil (positive current collector 510). After drying, a positive current collector 510 coated with a priming-coat layer 520 (i.e., an aluminum foil coated with a priming-coat layer 520) is obtained.
2) Lithium iron phosphate (positive active material LFP), conductive carbon black (conductive agent), and PVDF (binder) are placed in a stirring tank, and are fully stirred and dispersed in NMP in a certain proportion of x/(y+z)=34.5. The slurry is stirred at a speed of 350rmp for 60min to obtain a positive electrode slurry, where the value of y/b is shown in Table 1 below.
3) The positive electrode slurry is coated on the surface of the priming-coat layer 520 away from the aluminum foil (positive current collector 510). The coating speed is controlled to be 6m/min. Then, it is placed in a vacuum drying oven, and the temperature of the drying oven is set to 110°C. It is moved in the vacuum drying oven at 6m/min, and rolled up at the tail of the vacuum drying oven to obtain a positive electrode sheet 500.

### Second embodiment

The positive electrode sheet 500 of this embodiment is prepared by the following steps.
1) Polymethyl methacrylate (PMMA, i.e., adhesive) and conductive carbon black (i.e., conductive particles) are placed in a stirring tank, and are fully stirred and dispersed in water in a certain proportion to obtain a priming-coat layer slurry. The priming-coat layer slurry is coated on the aluminum foil (positive current collector 510). After drying, a positive current collector 510 coated with a priming-coat layer 520 (i.e., an aluminum foil coated with a priming-coat layer 520) is obtained.
2) Lithium iron phosphate (positive active material LFP), conductive carbon black (conductive agent), and PVDF (binder) are placed in a stirring tank, and are stirred and dispersed in NMP in a ratio of x/(y+z)=32. The slurry is stirred at a speed of 350rmp for 80min to obtain a positive electrode slurry, where the value of y/b is shown in Table 1 below.
3) The positive electrode slurry is coated on the surface of the priming-coat layer 520 away from the aluminum foil (positive current collector 510), and the coating speed is controlled to be 6.5m/min. Then, it is placed in a vacuum drying oven, and the temperature of the drying oven is set to 108°C. It is moved in the vacuum drying oven at 6.5m/min, and rolled up at the tail of the vacuum drying oven to obtain a positive electrode sheet 500.

### Third embodiment

The positive electrode sheet 500 of this embodiment is prepared by the following steps.
1) Polymethyl methacrylate (PMMA, i.e., adhesive) and conductive carbon black (i.e., conductive particles) are placed in a stirring tank, and are fully stirred and dispersed in water in a certain proportion to obtain a priming-coat layer slurry. The priming-coat layer slurry is coated on the aluminum foil (positive current collector 510). After drying, a positive current collector 510 coated with a priming-coat layer 520 (i.e., an aluminum foil coated with a priming-coat layer 520) is obtained.
2) Lithium iron phosphate (positive active material LFP), conductive carbon black (conductive agent), and PVDF (binder) are placed in a stirring tank, and are stirred and dispersed in NMP at a ratio of x/(y+z)=30. The slurry is stirred at a speed of 350rmp for 60min to obtain a positive electrode slurry, where the value of y/b is shown in Table 1 below.
3) The positive electrode slurry is coated on the surface of the priming-coat layer 520 away from the aluminum foil (positive current collector 510), and the coating speed is controlled to be 5.5m/min. Then, it is placed in a vacuum drying oven, and the temperature of the drying oven is set to 105°C. It is moved in the vacuum drying oven at 6.5m/min, and rolled up at the tail of the vacuum drying oven to obtain a positive electrode sheet 500.

### Fourth embodiment

The positive electrode sheet 500 of this embodiment is prepared by the following steps.
1) Polymethyl methacrylate (PMMA, i.e., adhesive) and conductive carbon black (i.e., conductive particles) are placed in a stirring tank, and are fully stirred and dispersed in water in a certain proportion to obtain a priming-coat layer slurry. The priming-coat layer slurry is coated on the aluminum foil (positive current collector 510). After drying, a positive current collector 510 coated with a priming-coat layer 520 (i.e., an aluminum foil coated with a priming-coat layer 520) is obtained.
2) Lithium iron phosphate (positive active material LFP), conductive carbon black (conductive agent), and PVDF (binder) are placed in a stirring tank, and are fully stirred and dispersed in NMP at a ratio of x/(y+z)=28. The slurry is stirred at a speed of 350rmp for 60min to obtain a positive electrode slurry, where the value of y/b is shown in Table 1 below.
3) The positive electrode slurry is coated on the surface of the priming-coat layer 520 away from the aluminum foil (positive current collector 510), and the coating speed is controlled to be 5.5m/min. Then, it is placed in a vacuum drying oven, and the temperature of the drying oven is set to 110°C. It is moved in the vacuum drying oven at 6.5m/min, and rolled up at the tail of the vacuum drying oven to obtain a positive electrode sheet 500.

### Third embodiment

The positive electrode sheet 500 of this embodiment is prepared by the following steps.
1) Polymethyl methacrylate (PMMA, i.e., adhesive) and conductive carbon black (i.e., conductive particles) are placed in a stirring tank, and fully stirred and dispersed in water in a certain proportion to prepare a priming-coat layer slurry. The priming-coat layer slurry is coated on the aluminum foil (positive current collector 510). After drying, a positive current collector 510 coated with a priming-coat layer 520 (i.e., aluminum foil coated with a priming-coat layer 520) is obtained.
1) Lithium iron phosphate (positive active material LFP), conductive carbon black (conductive agent), and PVDF (binder) are placed in a stirring tank, and are fully stirred and dispersed in NMP at a ratio of x/(y+z)=24.5. It is stirred at a speed of 350rmp for 60min to obtain a positive electrode slurry, where the value of y/b is shown in Table 1 below.
3) The positive electrode slurry is coated on the surface of the priming-coat layer 520 away from the aluminum foil (positive current collector 510), and the coating speed is controlled to be 5.5m/min. Then, it is placed in a vacuum drying oven, and the temperature of the drying oven is set to 108°C. It is moved in the vacuum drying oven at 6m/min, and rolled up at the tail of the vacuum drying oven to obtain a positive electrode sheet 500.

### First comparative example

1) Polymethyl methacrylate (PMMA, i.e., adhesive) and conductive carbon black (i.e., conductive particles) are placed in a stirring tank, and are fully stirred and dispersed in water at a certain ratio to obtain a priming-coat layer slurry. The priming-coat layer slurry is coated on the aluminum foil (positive current collector 510). After drying, a positive current collector 510 coated with a priming-coat layer 520 (i.e., an aluminum foil coated with a priming-coat layer 520) is obtained.
2) Lithium iron phosphate (positive active material LFP), conductive carbon black (conductive agent), and PVDF (binder) are placed in a stirring tank, and are fully stirred and dispersed in NMP at a ratio of x/(y+z)=34.5. It is stirred at a speed of 350rmp for 40min to obtain a positive electrode slurry, where the value of y/b is shown in Table 1 below.
3) The positive electrode slurry is coated on the surface of the priming-coat layer 520 away from the aluminum foil (positive current collector 510), and the coating speed is controlled to be 7m/min. Then, it is placed in a vacuum drying oven, and the temperature of the drying oven is set to 105°C. It is moved in the vacuum drying oven at 7m/min, and rolled up at the tail of the vacuum drying oven to obtain a positive electrode sheet 500.

### Second comparative example

1) Polymethyl methacrylate (PMMA, i.e., adhesive) and conductive carbon black (i.e., conductive particles) are placed in a stirring tank, and are fully stirred and dispersed in water at a certain ratio to obtain a priming-coat layer slurry. The priming-coat layer slurry is coated on the aluminum foil (positive current collector 510). After drying, a positive current collector 510 coated with a priming-coat layer 520 (i.e., an aluminum foil coated with a priming-coat layer 520) is obtained.
2) Lithium iron phosphate (positive active material LFP), conductive carbon black (conductive agent), and PVDF (binder) are placed in a stirring tank, and are fully stirred and dispersed in NMP at a ratio of x/(y+z)=34.5. It is stirred at a speed of 350rmp for 40min to obtain a positive electrode slurry, where the value of y/b is shown in Table 1 below.
3) The positive electrode slurry is coated on the surface of the priming-coat layer 520 away from the aluminum foil (positive current collector 510), and the coating speed is controlled to be 4.5/min. Then, it is placed in a vacuum drying oven, and the temperature of the drying oven is set to 105°C. It is moved in the vacuum drying oven at a speed of 4.5m/min, and rolled up at the tail of the vacuum drying oven to obtain a positive electrode sheet 500.

### Third comparative example

1) Polymethyl methacrylate (PMMA, i.e., adhesive) and conductive carbon black (i.e., conductive particles) are placed in a stirring tank, and are fully stirred and dispersed in water at a certain ratio to obtain a priming-coat layer slurry. The priming-coat layer slurry is coated on the aluminum foil (positive current collector 510). After drying, a positive current collector 510 coated with a priming-coat layer 520 (i.e., an aluminum foil coated with a priming-coat layer 520) is obtained.
2) Lithium iron phosphate (positive active material LFP), conductive carbon black (conductive agent), and PVDF (binder) are placed in a stirring tank, and are fully stirred and dispersed in NMP at a ratio of x/(y+z)=36. It is stirred at a speed of 350rmp for 40min to obtain a positive electrode slurry, where the value of y/b is shown in Table 1 below.
3) The positive electrode slurry is coated on the surface of the priming-coat layer 520 away from the aluminum foil (positive current collector 510), and the coating speed is controlled to be 7m/min. Then, it is placed in a vacuum drying oven, and the temperature of the drying oven is set to 108°C. It is moved in the vacuum drying oven at a speed of 6.5m/min, and rolled up at the tail of the vacuum drying oven to obtain a positive electrode sheet 500.

### Fourth comparative example

1) Polymethyl methacrylate (PMMA, i.e., adhesive) and conductive carbon black (i.e., conductive particles) are placed in a stirring tank, and are fully stirred and dispersed in water at a certain ratio to obtain a priming-coat layer slurry. The priming-coat layer slurry is coated on the aluminum foil (positive current collector 510). After drying, a positive current collector 510 coated with a priming-coat layer 520 (i.e., an aluminum foil coated with a priming-coat layer 520) is obtained.
2) Lithium iron phosphate (positive active material LFP), conductive carbon black (conductive agent), and PVDF (binder) are placed in a stirring tank, and are fully stirred and dispersed in NMP at a ratio of x/(y+z)=22. It is stirred at a speed of 350rmp for 40min to obtain a positive electrode slurry, where the value of y/b is shown in Table 1 below.
3) The positive electrode slurry is coated on the surface of the priming-coat layer 520 away from the aluminum foil (positive current collector 510), and the coating speed is controlled to be 7m/min. Then, it is placed in a vacuum drying oven, and the temperature of the drying oven is set to 108°C. It is moved in the vacuum drying oven at a speed of 6.5m/min, and rolled up at the tail of the vacuum drying oven to obtain a positive electrode sheet 500.

### Performance test

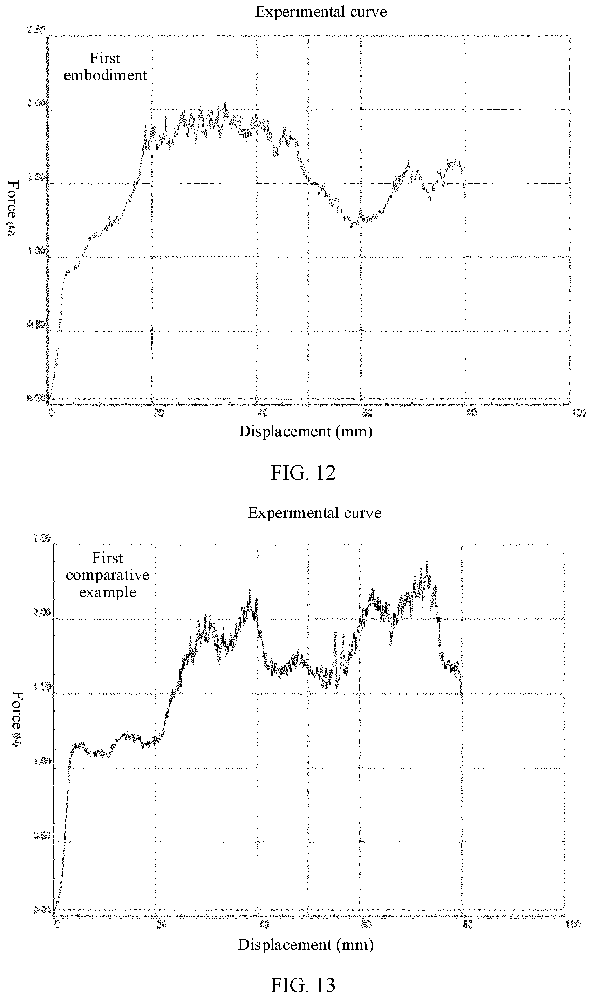

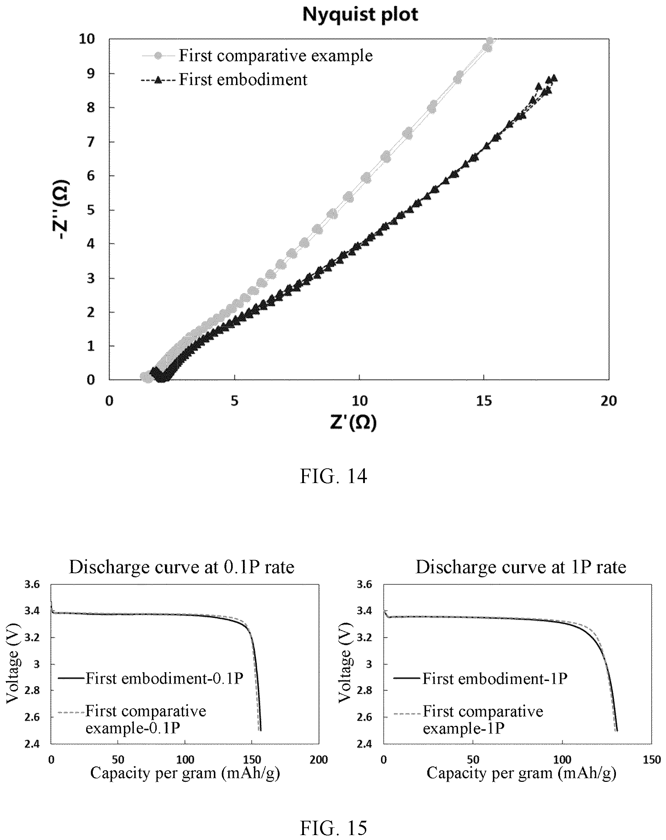

(1) Peeling force test: The positive electrode sheet is cut into strips with a width of 25mm and a length of 20cm by a cutting machine. A steel plate and a 20mm×100mm 3M double-sided tape are taken. The positive electrode sheet, the double-sided tape and the steel sheet are overlapped in sequence. A roller rolls back and forth 3 times to make the positive electrode sheet firmly bonded to the steel plate. The positive electrode sheet and the steel plate are manually disconnected for a certain length. The disconnected end of the steel plate is fixed to a fixed fixture of a tensile machine, and the disconnected end of the positive electrode sheet is fixed to a stretching fixture of the tensile machine. The tensile machine is started for stretching, where the stretching speed is 50mm/min, and a tension-displacement curve (i.e., the peeling force curve) is obtained. The tension with a displacement between 30mm and 50mm in the tension-displacement curve is selected to calculate an average value, so as to obtain the peeling force between the positive current collector and the positive active layer of the positive electrode sheet.
   The peeling force test curve of the positive electrode sheet of the first embodiment is shown in FIG. 12, and the peeling force test curve of the positive electrode sheet of the first comparative example is shown in FIG. 13.
(2) Test of the mass fraction of the binder: A part of the positive electrode sheet containing the binder is scraped to obtain powder, the powder is placed in a crucible, and subjected to a thermogravimetric test (TGA). The temperature is raised from 25°C to 650°C in a N2 atmosphere, and the temperature rise speed is 10°C/min. The mass fraction of the binder = (weight change rate at 550°C - weight change rate at 300°C)/65%, where 65% is a decomposition ratio of the binder at high temperature.
(3) Symmetrical battery EIS impedance test of the positive electrode sheet: After installing a clamp for the small soft-pack symmetrical battery assembled with the positive electrode sheet, it is placed in a high and low temperature box at 25°C for 10 minutes. In the high and low temperature box, the test line is connected to the test board, and the battery is clamped on the test board. The *Mulistat* test software is opened, the *Pstat* button is clicked, the protection voltage is set to 4V and the protection current is set to 1A, and the test item interface is selected. The *Impedance* button is clicked to enter the impedance test interface, and the disturbance voltage is set to 5mV, the high frequency is set to 1MHz, and the low frequency is set to 0.01Hz for testing. The Nyquist impedance spectra of the positive electrode sheets of the first embodiment and the first comparative example are shown in FIG. 14.
(4) Discharge capacity test: half-button batteries 400 are formed by the positive electrode sheets 500 of the above-mentioned embodiments and comparative examples and using a lithium sheet as the counter electrode, and the discharge capacities of the half-button batteries 400 at room temperature (i.e., 25°C) at 0.1P rate and 1P rate are measured. The discharge curves of the half-button batteries composed of the positive electrode sheets of the first embodiment and the first comparative example at 0.1P rate and 1P rate are shown in FIG. 15, where the left figure is the discharge curve at 0.1P rate, and the right figure is the discharge curve at 1P rate.

**Table 1 Parameters of each embodiment and each comparative example**

| Example | x/(y+z) | y1/y2 | y/b | Peeling force (N/m) | Resistivity of positive electrode sheet (Ω•cm) | Charge transfer impedance of positive electrode sheet (Ω) | 0.1P discharge gram capacity (mA/g) | 1P discharge gram capacity (mA/g) |
|---|---|---|---|---|---|---|---|---|
| First embodime nt | 34.5 | 1.15 | 5.75 | 85.3 | 66 | 9.3 | 156.3 | 132.9 |
| Second embodime nt | 32 | 1.12 | 5.6 | 84.1 | 80 | 10.7 | 156 | 132.2 |
| Third embodime nt | 30 | 1.09 | 5.45 | 83.2 | 87 | 11.6 | 155.8 | 131.7 |
| Fourth embodime nt | 28 | 1.19 | 5.95 | 82.9 | 88 | 11.5 | 156.1 | 131.8 |
| Fifth embodime nt | 24.5 | 1.02 | 5.1 | 80.8 | 86 | 11.8 | 155.7 | 131.5 |
| First comparativ e example | 34.5 | 1.21 | 8.64 | 83.4 | 94 | 12.9 | 155.5 | 131.2 |
| Second comparativ e example | 34.5 | 1.00 | 3.09 | 86.3 | 92 | 12.3 | 155.3 | 130.5 |
| Third comparativ e example | 36 | 1.11 | 5.55 | 90.3 | 103 | 15.8 | 150.2 | 127.3 |
| Fourth comparativ e example | 22 | 1.12 | 5.6 | 55.7 | 116 | 13.7 | 148.7 | 123.5 |

From the test data of the first to fifth embodiments and the first to second comparative examples, it can be seen that when 1.01≤y1/y2≤1.20, as y1/y2 increases, the resistivity and charge transfer impedance of the positive electrode sheet 500 first gradually decrease, and then gradually increase. When y1/y2=1.15, the resistivity and charge transfer impedance of the positive electrode sheet 500 reach the minimum.

From the test results of the first embodiment and the first comparative example, it can be seen that in the case that the composition and proportion of materials of the positive active layer 530 are the same (i.e., x/(y+z)=34.5), when 1.01≤y1/y2≤1.20 (y1/y2=1.15 in the first embodiment), the positive electrode sheet 500 has a lower resistivity and a lower charge transfer impedance. When y1/y2 is greater than 1.2, the resistivity and charge transfer impedance of the positive electrode sheet 500 are greatly increased. Compared with the first comparative example, the resistivity of the positive electrode sheet 500 in the first embodiment is reduced by nearly 30%, and the charge transfer impedance is reduced by nearly 25%. In addition, the peeling force, and the discharge capacities at 0.1P and 1P of the positive active layer 530 in the first embodiment are slightly increased compared with those in the first comparative example, but the increase is not much.

From the test data of the first to fifth embodiments and the third and fourth comparative examples, it can be seen that when 24.5≤x/(y+z)≤34.5, the positive active layer 530 has a higher bonding force or peeling force, is not easy to losing powder or material, and the resistivity and charge transfer impedance of the positive electrode sheet 500 are both small. From the test result of the fourth comparative example, it can be seen that when x/(y+z)=22 < 24.5, the bonding force of the positive active layer 530 is greatly reduced, and the resistivity and charge transfer impedance of the positive electrode sheet 500 also increase. It can be seen from the test result of the third comparative example that when x/(y+z)=36 > 34.5, although the bonding force of the positive active layer 530 increases, the resistivity and charge transfer impedance of the positive electrode sheet 500 are both large, which is not conducive to the dynamics of the positive electrode sheet 500.

The reference to "embodiment" and "implementation " in the present application means that the specific features, structures or characteristics described in combination with the embodiments can be comprised in at least one embodiment of the present application. The appearance of the phrases in various positions in the specification does not necessarily refer to the same embodiment, nor is it an independent or alternative embodiment that is mutually exclusive with other embodiments. It is explicitly and implicitly understood by those skilled in the art that the embodiments described in the present application can be combined with other embodiments. In addition, it can be understood that if there is no contradiction, the features, structures or characteristics described in the embodiments of the present application can be arbitrarily combined to form another embodiment that does not deviate from the spirit and scope of the technical solution of the present application.

Finally, it can be noted that the above implementations are only used to illustrate the technical solutions of the present application and are not intended to limit them. Although the present application has been described in detail with reference to the above implementations, a person of ordinary skill in the art can understand that the technical solutions of the present application may be modified or replaced by equivalents, which are not departing from the spirit and scope of the technical solutions of the present application.

## Claims

1. A positive electrode sheet (500), comprising:
a positive current collector (510); and
a positive active layer (530), wherein the positive active layer (530) is disposed on a side of the positive current collector (510), the positive active layer (530) comprises a positive active material, a binder and a conductive agent, and in the positive active layer (530), an average mass fraction of the positive active material is x, an average mass fraction of the binder is y, and an average mass fraction of the conductive agent is z, wherein the positive active layer (530) satisfies a relationship: 24.5≤x/(y+z)≤34.5.

2. The positive electrode sheet (500) according to claim 1, wherein a concentration of the binder gradually decreases from a side of the positive active layer (530) away from the positive current collector (510) to a side of the positive active layer (530) close to the positive current collector (510).

3. The positive electrode sheet (500) according to claim 2, wherein a difference between a mass fraction of the binder on the side of the positive active layer (530) away from the positive current collector (510) and a mass fraction of the binder on the side of the positive active layer (530) close to the positive current collector (510) is in a range of: 0.01%≤ Δy≤ 0.4%.

4. The positive electrode sheet (500) according to claim 1, wherein along a stacking direction of the positive current collector (510) and the positive active layer (530), the positive active layer (530) is divided into a first layer (531) and a second layer with an equal thickness, the first layer (531) is farther away from the positive current collector (510) than the second layer, an average mass fraction of the binder in the first layer (531) is y1, and an average mass fraction of the binder in the second layer is y2, then 1.01≤y1/y2≤1.20.

5. The positive electrode sheet (500) according to any one of claims 1 to 4, wherein a concentration of the conductive agent gradually decreases from a side of the positive active layer (530) away from the positive current collector (510) to a side of the positive active layer (530) close to the positive current collector (510).

6. The positive electrode sheet (500) according to claim 5, wherein a difference between a mass fraction of the conductive agent on the side of the positive active layer (530) away from the positive current collector (510) and a mass fraction of the conductive agent on the side of the positive active layer (530) close to the positive current collector (510) is in a range of: 0.01%≤ Δz≤0.4%.

7. The positive electrode sheet (500) according to claim 5, wherein along a stacking direction of the positive current collector (510) and the positive active layer (530), the positive active layer (530) is divided into a first layer (531) and a second layer (533) with an equal thickness, the first layer (531) is farther away from the positive current collector (510) than the second layer (533), an average mass fraction of the conductive agent in the first layer (531) is z1, and an average mass fraction of the conductive agent in the second layer (533) is z2, then 1.01≤z1/z2 ≤1.20.

8. The positive electrode sheet (500) according to any one of claims 1 to 4, 6, and 7, wherein the positive electrode sheet (500) further comprises a priming-coat layer (520), and the priming-coat layer (520) is disposed between the positive current collector (510) and the positive active layer (530).

9. The positive electrode sheet (500) according to claim 8, wherein a mass fraction of the priming-coat layer (520) to the positive active layer (530) is b, wherein 4≤y/b≤8.

10. A battery (400), comprising:
an electrolyte;
a positive electrode sheet (500) according to any one of claims 1 to 9, wherein the positive electrode sheet (500) is at least partially immersed in the electrolyte;
a separator (410), wherein the separator (410) is located on a side of the positive electrode sheet (500) and is at least partially immersed in the electrolyte; and
a negative electrode sheet (430), wherein the negative electrode sheet (430) is arranged on a side of the separator (410) away from the positive electrode sheet (500) and is at least partially immersed in the electrolyte.

11. An energy storage device (100), comprising:
a case (110); and
a plurality of batteries (400) according to claim 10, wherein the plurality of batteries (400) are accommodated in the case (110), and a connection manner of the plurality of batteries (400) comprises at least one of a series connection or a parallel connection.

12. An electrical system (200), comprising:
an electrical equipment (210); and
a battery (400) according to claim 10, wherein the battery (400) is electrically connected to the electrical equipment (210) and is configured to supply power to the electrical equipment (210).

13. An energy storage system (300), comprising:
an electric energy conversion device (310), wherein the electric energy conversion device (310) is configured to convert an energy of other form into an electric energy;
an energy storage device (100) according to claim 11, wherein the energy storage device (100) is electrically connected to the electric energy conversion device (310) and is configured to store the electric energy of the electric energy conversion device; and
an electrical load (330), wherein the electrical load (330) is electrically connected to the electric energy conversion device (310) and the energy storage device (100), respectively, and is configured to work using the electric energy of the electric energy conversion device (310) or the energy storage device (100).
